# EUROPÄISCHE PATENTANMELDUNG

(11) **EP 3 511 749 A1**
(43) Veröffentlichungstag der Anmeldung: **17.07.2019**
(21) Anmeldenummer: 18150965.4
(22) Anmeldetag: 10.01.2018
(51) Int. Cl.: G02B 6/122, G02B 6/13

(54) **TRANSPARENTE SCHICHTEN ZUR OPTISCHEN DATENÜBERTRAGUNG**

(71) Anmelder: Deutsche Telekom AG, 53113 Bonn (DE)
(72) Erfinder: BUNGE, Christian-Alexander, 14532 Kleinmachnow (DE)
(74) Vertreter: Vossius & Partner Patentanwälte Rechtsanwälte mbB

(57) **Zusammenfassung**

Durch die Erfindung wird eine Lichtleitvorrichtung zur optischen Datenübertragung bereitgestellt. Die Vorrichtung weist einen auf einer Substratfläche angeordneten transparenten, sich in einer Längsrichtung erstreckenden flächigen Film auf. Der Film weist zumindest eine innere transparente Schicht mit einer Brechzahl n_{S}>1 auf. Der Film grenzt an zumindest seiner Oberflächen an die umgebende Luft an, so dass eine Grenzfläche gebildet wird, an der in dem Film ausbreitendes Licht totalreflektiert werden kann. Die Erfindung stellt ferner ein Verfahren zum Anordnen der erfindungsgemäßen Lichtleitvorrichtung bereit.

## Beschreibung

Die Erfindung betrifft eine Lichtleitvorrichtung zur optischen Datenübertragung mittels Totalreflexion, insbesondere zur Übertragung von Daten auf den letzten Metern eines Zugangsnetzes.

Im Zugangsnetz, das insbesondere das Internet mit lokalen Netzen insbesondere in Privathaushalten verbindet, sind die letzten Meter bis zum Kunden sind oft aufwändig und teuer.

Oft werden die optischen Verbindungen entweder am Haus oder weiter vorn terminiert und die Datenverbindung über die vorhandene elektrische Verkabelung realisiert, oder es wird eine neue Kabelinfrastruktur im Haus benötigt, die die optischen Signale zu allen Teilnehmern weiterleiten kann. Gerade diese Hausverkabelung stellt ökonomische oder teilweise auch rechtliche Herausforderungen dar, weil diese mit Anfangsinvestitionen verbunden sind und oft der Zustimmung der Hausgemeinschaft oder des Inhabers bedürfen.

Für die Datenkommunikation im Inhausnetz werden verschiedenste Technologien verwendet. Zum Einen kann die vorhandene elektrische Kabelinfrastruktur verwendet werden. Dazu zählen die Leitungen der Energieversorgung, die man beispielsweise mittels Trägerfrequenztechnik (z.B. power-line communications [1] oder G.hn [2]) realisieren kann. Die meist vorhandenen Telefonkabel werden derzeit in Form vom DSL (Digital Subscriber Line [3]) oder auch G.fast [4]) genutzt. Auch die Koaxialkabel-Infrastruktur, die in einigen Häusern vorhanden ist, um vornehmlich Kabelfernsehen bereitzustellen, kann für sog. HFC (Hybrid Fibre Coax [5]) verwendet werden. Diese Technologien haben alle den Vorteil, dass sie - falls sie schon vorhanden sind - mehrfach genutzt werden könnten und keine bzw. wenig zusätzliche Installationskosten nach sich ziehen. Andererseits ist die Nutzung nicht immer einfach, da beispielsweise Zugang gewährt werden muss und die Eigentümer der Infrastruktur der Nutzung zustimmen müssen. Weitere Kandidaten sind optische Verbindungen in Form von (meist biegeunempfindlichen) Einmodenfasern, die direkt als Teil des passiven optischen Netzes (PON [6]) genutzt werden können, ohne eine Medienumwandlung durchzuführen. Diese Technologie ist seit Jahren bekannt und leistungsfähig, hat aber unter anderem die Nachteile, dass die auftretenden Verluste zusätzlich durch das Leistungsbudget des PON-Systems aufgefangen werden müssen und dass die Installation von Einmodenfasern sehr teuer ist. Preiswertere Alternativen könnten optische Mehrmodenfasern [7] sein, die entweder aus Glas (mit Kerndurchmessern im Bereich von 50 µm) oder aus Polymer (mit Kerndurchmessern bis zu 1 mm) [8] bestehen. Ihre größeren Durchmesser erlauben eine einfachere Installation. Polymerfasern sind zudem sehr robust. Dennoch handelt es sich hier weiterhin um eine relativ aufwändige Hausinstallation, die meist Kabelschächte, Bauarbeiten etc. erfordern.

Daher haben sich in vielen Bereichen Funklösungen etabliert, die auf Kabelinfrastruktur verzichten und die damit verbundenen Investitionen zumindest teilweise umgehen. So kann die Netzabdeckung eines gesamten Hauses beispielsweise mit WLAN-Technologie [9] erfolgen, die jedoch Antennen in regelmäßigen Abständen innerhalb des Hauses erfordern und somit auch auf eine - wenn auch weniger engmaschige - Kabelinfrastruktur zurückgreifen. Weitere Beispiele für Funktechnologien sind verschiedene Ausprägungen des Mobilfunknetzes wie UMTS [10] oder LTE [11], die aufgrund der größeren Reichweiten ganze Häuser versorgen könnten, wobei sich allerdings alle Kunden die zur Verfügung stehende Datenrate teilen müssten, was meist zu geringe Datenraten pro Kunden zur Folge hat. Dieses Problem kann man teilweise damit umgehen, dass eine gerichtete Funklösung, sog. Richtfunk, zum Einsatz kommt. Hierbei wird die Abstrahlung der Funkwelle so gebündelt, dass diese nur in die Richtung des Empfängers, hier beispielsweise die Wohnung des zu versorgenden Kunden, abstrahlt. Je kürzer die Wellenlänge des genutzten Mediums ist, desto besser lässt sich die Welle fokussieren, weshalb Funklösungen mit Trägerfrequenzen von mindestens 60 GHz [12] oder optische Funklösungen dafür infrage kommen [13]. Während diese Lösungen einzelne Kunden bedienen und somit gezielt einzelne Kunden versorgen können, haben sie den Nachteil aller Funklösungen, dass Wettereinflüsse die Verbindung beeinträchtigen können. Zudem ist bei Richtfunklösungen eine Sichtverbindung zwingend notwendig, weshalb diese nur eingeschränkt, beispielsweise von Straßenlaternen durch die Fenster der Wohnung, einsetzbar sind.
[1] Richard A. Johnson, Arthur A. Anderson, Dirk J. Boomgaard, "Power line carrier communication system", US-Patent US 4885563 A, 1989.
[2] S. Galli, O. Logvinov, "Recent Developments in the Standardization of Power Line Communications within the IEEE", IEEE Commun. Mag., vol. 46, no. 7, July 2008.
[3] ITU-T G.993.1 Recommendation: Very high speed digital subscriber line transceivers (VDSL), 2004.
[4] ITU-T G.9701 Recommendation: Fast access to subscriber terminals (G.fast) - Physical layer specification, 2014.
[5] Robert C. Loveless, "Hybrid fiber coax communications system, Europäisches Patent EP 0873638 A1, 1998.
[6] Jer-Chen Kuo, Gerald A. Pesavento, "Passive optical network", US-Patent US 7272321 B1, 2000.
[7] David George Cunningham, Lutz Raddatz, Ian White, Mark Nowell, "Multimode communications systems", Patent WO 1997033390 A1, 1997.
[8] Yasuhiro Koike, Takaaki Ishigure, Hidenobu Murofushi, Yuji Watanabe, Tsuyoshi Onishi, "Plastic optical fiber", US-Patent US 20050207714 A1, 2005.
[9] IEEE 802.11-Standard: "Wireless LAN", 1997.
[10] ETSI TS 122 101: Universal Mobile Telecommunications System (UMTS), 2000.
[11] 3GPP: TS 36.211 Evolved Universal Terrestrial Radio Access (E-UTRA); Physical channels and modulation. 2008.
[12] IEEE 802.1 lad-Standard: "Microwave Wi-Fi", 2013.
[13] C. Lange, C. Behrens, E. Weis, J. Kraus, S. Krauss, M. Grigat, H. Droste, T. Rosowski, T. Monath, C.-A. Bunge, E. Bogenfeld, M. Amend, N. Bayer, M. Dueser, F.-J. Westphal, A. Gladisch, "Bridging the Last Mile-Evaluating Alternative Connectivity Options", in ITG-Fachbericht 262, Breitbandversorgung in Deutschland, Berlin, Apr. 2016.

Es besteht also ein Bedürfnis nach einer einfachen Möglichkeit, eine optische Verbindung auf den letzten Metern eines Zugangsnetzes zu realisieren, wie sie beispielsweise bei *Fibre-tothe-Home*-Netzen notwendig ist. Insbesondere ist wünschenswert, unauffällige Lösungen bereitzustellen, die wenig Investition und Eingriffe in die vorhandene Bausubstanz erfordern.

Die Grundidee der vorliegenden Erfindung beruht auf der Lichtleitung mittels Totalreflexion. Dazu muss ein optisch transparentes (Kern-)Material von einem weiteren (Mantel-)Material umgeben sein, das eine niedrigere Brechzahl aufweist. Im erfindungsgemäßen Fall ist das umgebende Material Luft, das eine sehr niedrige Brechzahl in der Nähe von eins aufweist. Der Wellenleiter soll aus einem einfach auf eine Substratfläche bzw. einen Untergrund aufzubringenden durchsichtigen Material bestehen, das beispielsweise ein optisches Polymer, durchsichtige Farbe, Harz oder auch Wasser sein kann. Mit diesem Aufbau lassen sich extrem einfach und schnell optische Wellenleiter realisieren, die zwar keine besonders hohe Qualität aufweisen, aber simpel herzustellen, anzubringen und gegebenenfalls auch wieder zu entfernen sind.

Die optische Verbindung kann dann dadurch realisiert werden, dass ein optischer Sender an einem Ende des Wellenleiters platziert wird bzw. eine Faser mit dem Wellenleiter verbunden wird, die von einem optischen Sender gespeist wird. Am anderen Ende, das gegebenenfalls auch in Form eines Sternnetzes ausgelegt sein kann und mehrere Enden aufweist, ist der optische Empfänger bzw. eine Faser angeschlossen, die das Licht zu einem optischen Empfänger weiterleitet.

Im Einzelnen wird durch die vorliegende Erfindung eine Lichtleitvorrichtung zur optischen Datenübertragung bereitgestellt. Die Vorrichtung weist einen auf einer Substratfläche, beispielsweise einer Hauswand, angeordneten transparenten, sich in einer Längsrichtung erstreckenden flächigen Film auf. Der Film ist beispielsweise höchstens 10 cm breit und/oder höchstens 2 mm dick. Der Film weist zumindest eine innere transparente Schicht mit einer Brechzahl n_{S}>1 auf. Der Film grenzt an zumindest seiner Oberflächen an die umgebende Luft an, so dass eine Grenzfläche gebildet wird, an der in dem Film ausbreitendes Licht totalreflektiert werden kann.

Der Film kann auf der der Substratfläche zugewandten Seite der inneren transparenten Schicht ferner eine zweite transparente Schicht mit einer Brechzahl n_{U}<n_{S} aufweisen. Zusätzlich oder alternativ kann der Film ferner eine dritte transparente Schicht mit einer Brechzahl n_{U}<n_{S} auf der der Substratfläche abgewandten Seite der inneren transparenten Schicht aufweisen. Der Film kann auf die Substratfläche geklebt oder, wenn er in Form eines dickflüssigen, aushärtbaren Materials vorliegt, auch gestrichen werden. Der Film ist insbesondere aus optischen Polymeren, Harzen, insbesondere Epoxidharz, Silikon, Gelatine und/oder Wasser.

Der Film kann ferner auf der der Substratfläche zugewandten Seite eine transparente Grundierung mit eine Brechzahl n_{G}<n_{S} aufweisen und zusätzlich oder alternativ durch eine Abdeckschicht mit einer Brechzahl n_{A}<n_{S} überdeckt sein. Grundierung und Abdeckschicht können hierbei das gleiche Material aufweisen, das in diesem Fall die innere transparente Schicht, sowie gegebenenfalls die zweite und/oder dritte transparente Schicht vollkommen umschließt.

Zumindest die innere transparente Schicht kann derart strukturiert sein, dass sie in Querrichtung Bereiche mit einer Brechzahl kleiner n_{S} aufweist.

Zum Ein- und Auskoppeln der Signale in bzw. auch der Lichtleitvorrichtung können die Enden des Films einen optischen Sender und/oder einen optischen Empfänger aufweisen.

Durch die Erfindung wird ferner ein Verfahren zum Anordnen der Lichtleitvorrichtung bereitgestellt. Wie oben erwähnt kann das Material zur Bildung der inneren transparenten Schicht auf die Substratfläche gestrichen werden oder der Film kann in Form einer optischen Folie bereitgestellt und auf die Substratfläche geklebt werden. Vor dem Aufkleben der Folie kann eine Grundierung mit einem optisch transparenten Material auf die Substratfläche aufgebracht werden.

Die Erfindung kann somit vorhandene Wasserfilme auf der Fassade oder ebenen Flächen bzw. transparente Filme, die speziell auf die Wände, Decken und Böden aufgeprägt, gestrichen, gespachtelt, geklebt oder in anderer Weise aufgebracht werden, nutzen und bietet somit eine einfache und preiswerte Installation, die dennoch leistungsfähig genug ist, um die geforderten Datenraten über typische Entfernungen im Inhausnetz übertragen zu können.

Durch das einfache Aufbringen einer transparenten Schicht (z.B. in Form eines Pinselstrichs, einer gespachtelten Leiste oder auch mittels einer aufgeklebten transparenten Folie) zur optischen Datenkommunikation gemäß Ausführungsformen der vorliegenden Erfindung können die Vorteile der leitungsgebundenen Kommunikationstechnologien, wie Robustheit, gezielte Verbindung einzelner Kunden, die sich die Datenrate nicht teilen müssen, oder auch Energieeffizienz, damit kombiniert werden, dass keine aufwändige Kabelinfrastruktur installiert werden muss, sondern im einfachsten Fall nur eine spezielle Form von Anstrich im Haus benötigt wird.

Das erfindungsgemäße Verfahren bietet alle Vorteile einer optischen Verbindung für die Kommunikation, wie z.B. hohe Bandbreite, Nutzung kommerzieller optischer Komponenten, i.A. geringerer Energieverbrauch usw. Gleichzeitig werden die typischen Nachteile optischer Kommunikationslösungen vermieden: Das sind vor allem hohe Installationskosten, wie sie bei Einmodenfasersystemen, aber auch in abgemilderter Form in Mehrmodenglas- oder Polymerfasersystemen auftreten. Weitere Vorteile sind die leichte Entfernbarkeit der Kommunikationsverbindung und die relativ klare Trennung zwischen Immobilie und der auf der Wand angebrachten optischen Verbindung. Dies ermöglicht eine saubere rechtliche Trennung zwischen Kommunikationsinfrastruktur und dem Gebäude. Zudem ist ein sehr dünner, transparenter Film unauffällig und stört das gesamte Erscheinungsbild viel weniger als beispielsweise auf Putz verlegte Kabel.

Die Erfindung wird im Folgenden unter Verweis auf die Figuren näher beschrieben, wobei
Fig. 1 beispielhaft den Aufbau eines optischen Übertragungssystems mit transparenter Schicht zeigt,
Fig. 2 schematisch das Grundprinzip des Lichtleiters mit einem transparenten Film gemäß einer Ausführungsform der Erfindung darstellt,
Fig. 3 einen Lichtleiter gemäß einer weiteren Ausführungsform der Erfindung mit einem transparenten Film mit optischer Grundierung zeigt,
Fig. 4 einen Lichtleiter gemäß einer weiteren Ausführungsform der Erfindung mit einem transparenten Film aus einer Doppelfolie mit unterschiedlichen Brechungsindizes zeigt,
Fig. 5 einen Lichtleiter gemäß einer weiteren Ausführungsform der Erfindung mit einem transparenten Film mit optischer Grundierung und einer weiteren Abdeckschicht zeigt,
Fig. 6 einen Lichtleiter gemäß einer weiteren Ausführungsform der Erfindung mit einem transparenten Film aus einer Dreifachfolie mit unterschiedlichen Brechungsindizes zeigt und
Fig. 7 einen Lichtleiter gemäß einer weiteren Ausführungsform der Erfindung mit einem transparenten Film aus einer strukturierten Dreifachfolie mit unterschiedlichen Brechungsindizes zeigt.

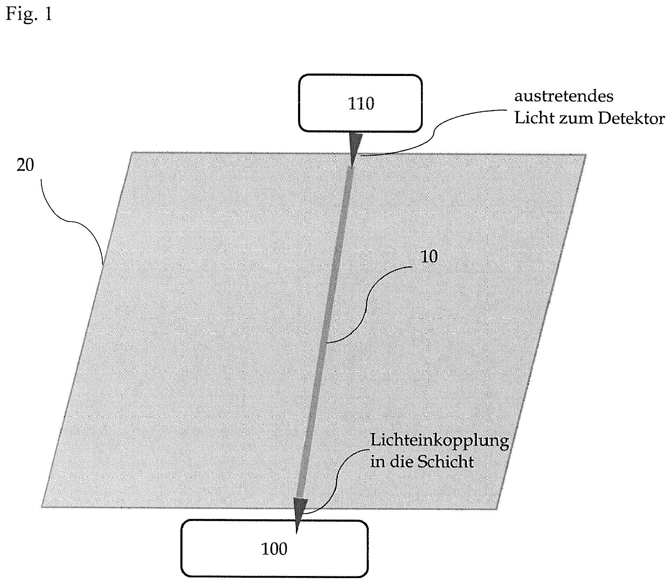

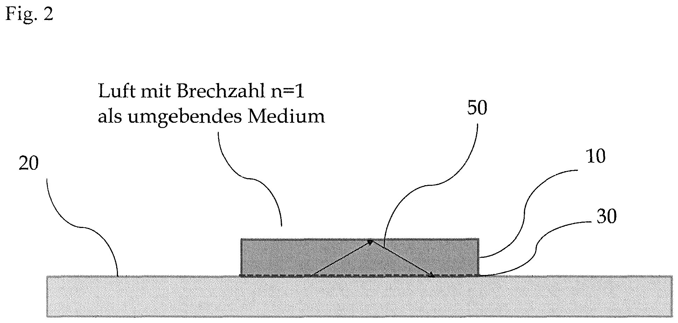

Die Erfindung beruht auf dem Lichtleitungsmechanismus der Totalreflexion. Fig. 1 zeigt einen beispielhaften Aufbau eines Gesamtsystems mit dem transparenten Film als Wellenleiter. Fig. 2 zeigt eine einfache Ausführungsform der transparenten Schicht als Wellenleiter. Eine transparente Schicht 10 mit Brechzahl n_{S}>1, die als Wellenleiterkern dient, wird auf eine Unterlage 20, also insbesondere die Wand oder die Decke geklebt, die nur als Substrat wirkt und die transparente Schicht 10 trägt. Diese Schicht 10 ist mit Luft umgeben, die aufgrund der geringeren Brechzahl als optischer Mantel wirkt.

Ein solcher Wellenleiter ist aufgrund des relativ großen Brechzahlunterschieds zwischen dem transparenten Kernmaterial, das beispielsweise aus optischen Polymeren, Epoxidharz, Silikon oder Wasser besteht, und der umgebenden Luft sowie der großen Breite von mehreren Zentimetern sehr vielmodig, sodass in einer solchen Struktur Modendispersion auftreten kann, die die verfügbare Bandbreite begrenzen kann. Diese wird jedoch über die angestrebten Verbindungslängen von unter 100 m noch ausreichend groß sein im Vergleich zu den konkurrierenden elektrischen und Funktechnologien.

Die oben beschriebene Grundstruktur der vorliegenden Erfindung besteht aus einer optisch transparenten Schicht 10, die einfach und lösbar auf verschiedenste Untergründe 20 aufgebracht werden kann und aufgrund der sehr geringen Dicke und ihrer Transparenz unauffällig ist. Mögliche Materialien für diese optische Schicht könnten optische Polymere, Silikone, Harze, Gelatine oder andere transparente Materialien sein, die bei der Verarbeitung dickflüssig sind und dann erstarren.

In der einfachsten Form besteht der vorgeschlagene optische Leiter aus einer Schicht 10, die wie Farbe oder Spachtelmasse auf verschiedenste Untergründe aufgebracht werden kann und lediglich von Luft umgeben ist. Hierbei ist die Applikation der Schicht sehr einfach und schnell durchzuführen.

In einer alternativen Ausführung wird die lichtleitende Schicht in Form einer dünnen Folie bereitgestellt, die auf den Untergrund 20 aufgeklebt werden kann. Dies hat den Vorteil, dass die optische Qualität der Folie besser kontrolliert werden kann, die Oberfläche i.A. glatter sein wird und somit weniger streut und schließlich die Folie schon vorproduziert werden kann und von einer Rolle aus verlegt werden kann. Da diese Folie dennoch sehr dünn und ggf. sogar strukturiert sein kann, sind hiermit bessere optische Eigenschaften erreichbar als mit dem einfachen Aufbringen der Schicht mittels Pinsel oder Spachtel.

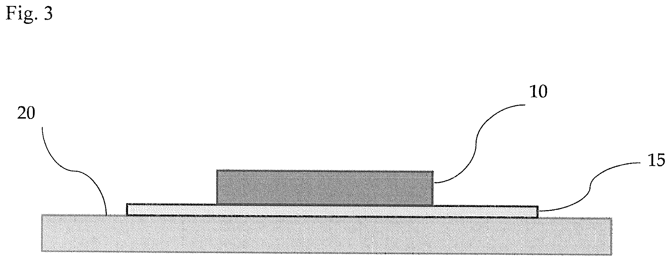

Da der direkte Kontakt des Wellenleiterkerns mit dem nicht transparenten Untergrund ggf. erhöhte Verluste an der Grenzfläche zur Folge hat, kann das Prinzip dahingehend verbessert werden, dass zuerst eine Grundierung 15 mit einem optisch transparenten Material mit niedriger Brechzahl erfolgt, auf die der eigentliche Wellenleiter appliziert wird. Fig. 3 zeigt den sich ergebenden optischen Aufbau dieser Ausführungsform. Dadurch, dass an allen vier Seiten des Wellenleiterkerns 10 eine Grenzfläche hin zu einem optisch transparenten Material mit niedrigerem Brechungsindex existiert, kann überall Wellenleitung mittels Totalreflexion stattfinden. Zudem wird aufgrund der Oberflächenspannung des Grundierungsmaterials die Grenzfläche deutlich glatter sein als im Falle der direkten Applikation des Wellenleiters auf den Untergrund, sodass mit weniger Streuung an der Grenzfläche zu rechnen ist, was die Dämpfung verringert.

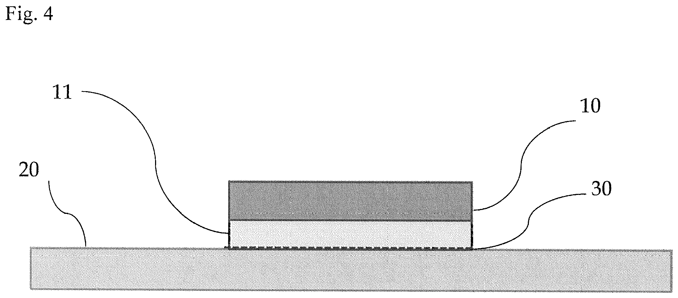

Eine Abwandlung einer derartigen Struktur ist eine Doppelfolie, die aus zwei transparenten Folien mit unterschiedlicher Brechzahl besteht. Die untere Schicht 11 sollte die niedrigere Brechzahl aufweisen und die gleiche Funktion übernehmen wie im obigen Beispiel die Grundierungsschicht 15. Fig. 4 zeigt einen beispielhaften Aufbau dieser Ausführungsform.

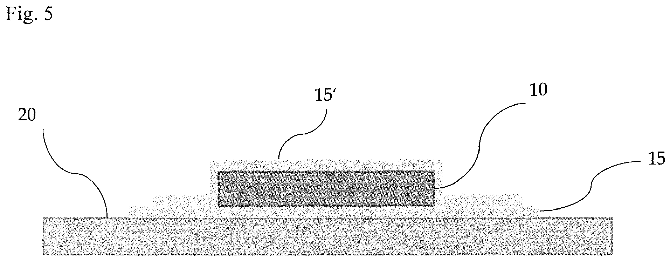

Um diese Struktur zudem noch besser gegen Umwelteinflüsse zu schützen, kann der so geschaffene Wellenleiter mit einer weiteren Lage 15' der schon oben genannten Grundierung 15 überstrichen werden, sodass die optisch transparente Schicht 10, die den Wellenleiterkern darstellt, vollkommen umhüllt ist vom Grundierungsmaterial, das eine geringere Brechzahl aufweist. Die beiden letztgenannten Schritte sind nicht zwingend notwendig, können aber den Wellenleitermechanismus verbessern, die Verluste verringern und somit für größere Reichweiten sorgen. Fig. 5 zeigt den optischen Aufbau dieser Ausführungsform.

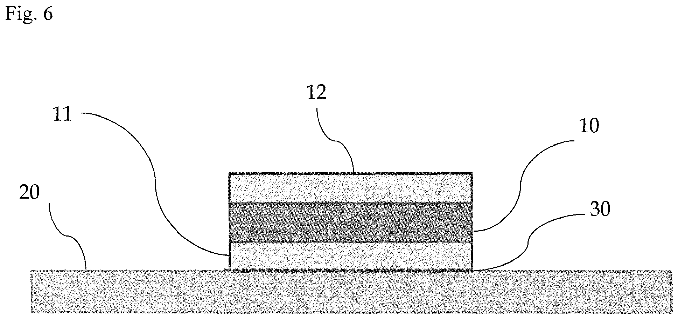

In einer alternativen Ausführungsform könnten alle drei optisch transparenten Schichten in Form von Folien realisiert sein, die jeweils über einander liegen. Hierbei wäre die lichtleitende Lage 10 mit der höchsten Brechzahl in der Mitte und von zwei optisch transparenten Lagen 11, 12 umgeben, die jeweils eine niedrigere Brechzahl aufweisen. Fig. 6 zeigt den prinzipiellen Aufbau dieser Ausführungsform. Der Vorteil dieses Aufbaus liegt darin, dass die Grenzflächen zwischen den optischen Schichten sehr sauber und glatt vorproduziert werden können und somit Streuung an den Grenzflächen vermindert werden kann. Dies führt zu deutlich geringeren Dämpfungen und somit zu höheren Reichweiten.

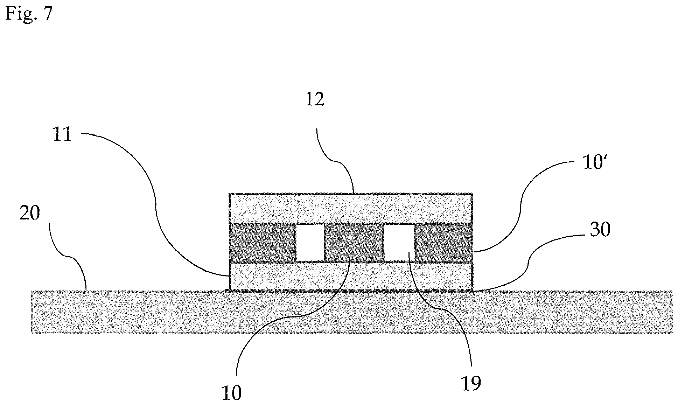

In einer weiteren Ausführungsform kann die dreilagige Folie weiter strukturiert werden, sodass die innere, lichtleitende Lage 10 auch zu den beiden Seiten stärker abgegrenzt wird. Fig. 7 zeigt den prinzipiellen Aufbau dieser Ausführungsform. Hierbei wird die innere Schicht 10' auf beiden Seiten verkürzt, sodass diese eine deutlich geringere Breite aufweist als die Schicht 11 darunter und die Deckschicht 12. Die lichtleitende Schicht 10' ist so in Breitenrichtung durch Bereiche 19 abgegrenzt, die aus Luft oder einem Material mit einer Brechzahl kleiner als n_{S} gebildet sind. Das hat den Vorteil, dass auch die beiden Seiten dieses rechteckigen Wellenleiters 10' besser definiert sind und auch eine Grenzschicht zum Material der Deckschicht 12 aufweisen. Zudem ist die Breite des Wellenleiters 10' stärker begrenzt, wodurch sich weniger Wellenleitermoden ausbilden und die Lichtleistung sich auf einen kleineren Querschnitt verteilt. Dies hat insbesondere am Empfänger den Vorteil, dass ein größerer Anteil der gesamten Leistung auf den Detektor abgebildet werden kann und somit die Koppelverluste verringert werden.

In einer speziellen Ausführung kann ein einfacher Wasserfilm als Wellenleiter genutzt werden. Dieser wird dann i.A. nicht explizit aufgebracht, sondern ist - beispielsweise bei Regenwetter oder Tau - schon an der Fassade oder der Dachrinne vorhanden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren, auch wenn sie dort im Zusammenhang mit anderen Merkmalen gezeigt sind und/oder vorstehend nicht genannt sind.

Weiterhin schließen die Ausdrücke "aufweisen" bzw. "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Lichtleitervorrichtung zur optischen Datenübertragung mit einem auf einer Substratfläche (20) angeordneten transparenten, sich in einer Längsrichtung erstreckenden flächigen Film mit einer inneren transparenten Schicht (10) mit einer Brechzahl n_{S}>1, wobei der Film an zumindest einer Oberfläche an die umgebende Luft angrenzt und so eine Grenzfläche gebildet wird, an der in dem Film ausbreitendes Licht totalreflektiert werden kann.

2. Lichtleitvorrichtung nach Anspruch 1, wobei der Film auf der der Substratfläche (20) zugewandten Seiter der inneren transparenten Schicht (10) ferner eine zweite transparente Schicht (11) mit einer Brechzahl n_{U}<n_{S} aufweist.

3. Lichtleitvorrichtung nach Anspruch 1 oder 2, wobei der Film ferner eine dritte transparente Schicht (12) mit einer Brechzahl n_{U}<n_{S} auf der der Substratfläche (20) abgewandten Seite der inneren transparenten Schicht (10) aufweist

4. Lichtleitvorrichtung nach einem der vorstehenden Ansprüche, wobei der Film auf die Substratfläche (20) geklebt ist.

5. Lichtleitvorrichtung nach einem der vorstehenden Ansprüche, wobei der Film ferner auf der der Substratfläche (20) zugewandten Seite eine transparente Grundierung (15) mit eine Brechzahl n_{G}<n_{S} aufweist.

6. Lichtleitvorrichtung nach einem der vorstehenden Ansprüche, wobei der Film auf den der Substratfläche abgewandten Seiten ferner Abdeckschicht (15') mit einer Brechzahl n_{A}<n_{S} aufweist, die die transparente Schicht (10) umgibt.

7. Lichtleitvorrichtung nach einem der vorstehenden Ansprüche, wobei zumindest die innere transparente Schicht (10') derart strukturiert ist, dass sie in Querrichtung Bereiche (19) mit einer Brechzahl kleiner n_{S} aufweist.

8. Lichtleitvorrichtung nach einem der vorstehenden Ansprüche, wobei die Substratfläche (20) durch die Fläche einer Hauswand gebildet ist.

9. Lichtleitvorrichtung nach einem der vorstehenden Ansprüche, wobei der Film optische Polymere, Harze, insbesondere Epoxidharz, Silikone, Gelatine und/oder Wasser aufweist.

10. Lichtleitvorrichtung nach einem der vorstehenden Ansprüche, wobei der Film eine Breite von höchstens 10 cm und/oder eine Dicke von höchstens 2 mm aufweist

11. Lichtleitvorrichtung nach einem der vorstehenden Ansprüche, wobei die Vorrichtung ferner an den Enden des Films einen optischen Sender (100) und/oder einen optischen Empfänger (110) aufweist.

12. Verfahren zum Anordnen einer Lichtleitvorrichtung nach einem der vorstehenden Ansprüche, wobei das Material zur Bildung der inneren transparenten Schicht (10) auf die Substratfläche (20) gestrichen wird.

13. Verfahren zum Anordnen einer Lichtleitvorrichtung nach einem der Ansprüche 1 bis 11, wobei der Film in Form einer optischen Folie bereitgestellt wird und auf die Substratfläche (20) geklebt wird.

14. Verfahren nach Anspruch 13, wobei vor dem Aufkleben der Folie eine Grundierung mit einem optisch transparenten Material auf die Substratfläche (20) aufgebracht wird.

## Geänderte Patentansprüche

### Geänderte Patentansprüche gemäss Regel 137(2) EPÜ.

1. Lichtleitervorrichtung zur optischen Datenübertragung mit einem auf einer Substratfläche (20) angeordneten transparenten, sich in einer Längsrichtung erstreckenden flächigen Film mit einer transparenten Schicht (10) mit einer Brechzahl nₛ>1, **dadurch gekennzeichnet, dass** die transparente Schicht (10) an zumindest der der Substratfläche (20) abgewandten Oberfläche an die umgebende Luft angrenzt und so eine Grenzfläche gebildet wird, an der in der transparenten Schicht (10) ausbreitendes Licht totalreflektiert werden kann, wobei die Vorrichtung ferner an den Enden des Films einen optischen Sender (100) und einen optischen Empfanger (110) aufweist.

2. Lichtleitvorrichtung nach Anspruch 1, wobei der Film auf der der Substratfläche (20) zugewandten Seiter der inneren transparenten Schicht (10) ferner eine zweite transparente Schicht (11) mit einer Brechzahl n_{U}<n_{S} aufweist.

3. Lichtleitvorrichtung nach Anspruch 1 oder 2, wobei die transparente Schicht (10) einen Wellenleiterkern bildet und die umgebende Luft einen optischen Mantel der lichtleitenden transparenten Schicht (10) bildet.

4. Lichtleitvorrichtung nach einem der vorstehenden Ansprüche, wobei der Film auf die Substratfläche (20) geklebt ist.

5. Lichtleitvorrichtung nach einem der vorstehenden Ansprüche, wobei der Film ferner auf der der Substratfläche (20) zugewandten Seite eine transparente Grundierung (15) mit eine Brechzahl n_{G}<n_{S} aufweist.

6. Lichtleitvorrichtung nach einem der vorstehenden Ansprüche, wobei die Substratfläche (20) durch die Fläche einer Hauswand gebildet ist.

7. Lichtleitvorrichtung nach einem der vorstehenden Ansprüche, wobei der Film optische Polymere, Harze, insbesondere Epoxidharz, Silikone, Gelatine und/oder Wasser aufweist.

8. Lichtleitvorrichtung nach einem der vorstehenden Ansprüche, wobei der Film eine Breite von höchstens 10 cm und/oder eine Dicke von höchstens 2 mm aufweist.

9. Verfahren zum Anordnen einer Lichtleitvorrichtung nach einem der vorstehenden Ansprüche, wobei das Material zur Bildung der transparenten Schicht (10) auf die Substratfläche (20) gestrichen wird.

10. Verfahren zum Anordnen einer Lichtleitvorrichtung nach einem der Ansprüche 1 bis 8, wobei der Film in Form einer optischen Folie bereitgestellt wird und auf die Substratfläche (20) geklebt wird.

11. Verfahren nach Anspruch 10, wobei vor dem Aufkleben der Folie eine Grundierung mit einem optisch transparenten Material auf die Substratfläche (20) aufgebracht wird.
